# EUROPEAN PATENT APPLICATION

(11) **EP 3 076 398 A1**
(43) Date of publication of application: **05.10.2016**
(21) Application number: 14865710.9
(22) Date of filing: 21.11.2014
(51) Int. Cl.: G21C 3/58

(54) **NUCLEAR FUEL PELLET HAVING ENHANCED THERMAL CONDUCTIVITY, AND PREPARATION METHOD THEREOF**

(30) Priority: 26.11.2013 RU 2013152247
(71) Applicant: Joint Stock Company "Akme-Engineering", Moscow 115035 (RU)
(72) Inventor: KURINA, Irina Semyonovna, Obninsk Kaluzhskaya obl. 249035 (RU); POPOV, Vjacheslav Vasilyevich, Obninsk Kaluzhskaya obl. 249034 (RU); RUMYANTSEV, Vladimir Nikolaevich, Obninsk Kaluzhskaya obl. 249033 (RU); RUSANOV, Aleksander Evgenievich, Obninsk Kaluzhskaya obl. 249032 (RU); ROGOV, Stepan Sergeevich, Obninsk Kaluzhskaya obl. 249034 (RU); SHARIKPULOV, Said Mirfaisovich, Moskovskaya obl. 143083 (RU)
(74) Representative: Mitev, Mitko Karushkov
(86) International application number: PCT/RU2014/000882
(87) International publication number: WO 2015/080626

(57) **Abstract**

The invention relates to nuclear physics, and specifically to reactor fuel elements and units thereof, and particularly to the composition of solid ceramic fuel elements based on uranium dioxide, intended for and exhibiting characteristics for being used in variously purposed nuclear reactors. The result consists in a more reliable, special structure and a simple composition of uranium dioxide without heterogeneous fuel pellet additives, approaching the characteristics of a monocrystal having enhanced, and specifically exceeding reference data, thermal conductivity as temperature increases, and a simple production method thereof. The result is achieved in that pores of between 1 and 5 microns in size are distributed along the perimeters of grains in the micro-structure of each metal cluster in a nuclear fuel pellet, and in that located within the grains are pores which are predominantly nano-sized. In addition, the metal clusters comprise between 0.01 and 1.0 percent by mass. The invention provides for a method of preparing a nuclear fuel pellet, including precipitating metal hydroxides, in two stages, having different pH levels. Uranium metal is melted at a temperature exceeding 1150°C, sintering is carried out in an insignificant amount of liquid phase at a temperature ranging between 1600 and 2200°C in a hydrogen medium until forming uranium dioxide, the structure of which includes metal clusters dispersed therein. An X-ray photon spectroscope is used for identifying the new structure of the UO2 pellet and the additional U-U chemical bond.

## Description

The invention relates to nuclear power engineering, in particular to reactor fuel elements and their blocks, especially to composition of solid-fuel ceramic elements based on uranium dioxide, that are intended to be used in nuclear reactors of different application and have corresponding properties.

A pellet of nanostructurized nuclear fuel (variants) is currently in use, it contains compressed and sintered powder representing the mixture of a U-compound and a nanodiamond particles with uniform effective size and density, besides in can contain compressed and sintered powder of the mixture of a compound (U, Pu) and nanodiamond particles (Patent N° 246741 1 RU, published on November 20, 2012).

However, in spite of the increased durability and thermal stability of the known pellet, its thermal conductivity is not high. Besides, introduction of more than 1 % of nanodiamond to 1 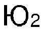 or (U, Pu)0₂ results in reduction of nuclear fuel effective density and can cause emergency situation during reactor operation, as diamond spontaneously converts to graphite and moulders with a burst if heated up to 2000 °C.

A high burnout nuclear fuel pellet and the method of its manufacturing (variants) are currently in use; where the pellet is based on uranium dioxide, it contains aluminum and silicon oxides, evenly spread throughout the pellet, and the content of aluminum in comparison with uranium is from 0.005 to 0.03 % wt., the content of silicon - from 0.003 to 0.02 % wt., mass ratio of aluminum to silicon is from 1.5 to 4, dimension of an uranium dioxide grain is within 20-45 µm. The pellet can additionally contain gadolinium oxide that is evenly distributed throughout the pellet as a solid solution with uranium dioxide, the content of gadolinium oxide in comparison with uranium is from 0.3 to 10.0 % wt., or it can contain erbium oxide that is evenly distributed throughout the pellet as a solid solution with uranium dioxide, the content of erbium oxide in comparison with uranium is from 0.3 to 0.8 % wt. (Patent Jfe 2376665RU, published on December 20, 2009). However, in spite of the fact that the result of using the known pellet in the increase of fuel burnout if it is operated at 70-100 MW day/kg U, its structure and composition are complex, and it does not possess increased thermal conductivity. Besides it is not intended to be used during the reactor operation in load following mode. Its manufacturing expenses are high.

A nuclear fuel pellet based on uranium dioxide is currently in use; the pellet contains compressed and sintered powder representing mixture of uranium dioxide with addition of erbium oxide (Er₂03), the contents of erbium oxide in nuclear fuel is from 0.46 to 0.64 % wt. by erbium at relative mass fraction of U-235 in the nuclear fuel from 2.6 to 2.8 % wt. The effective porosity of compressed and sintered mixture of uranium dioxide (U02) with addition of erbium oxide does not exceed 1 %. (Patent JY° 2157568RU, published on October 10, 2000).

Although addition of erbium oxide exceeds fuel burnout, it leads to decrease of the fuel thermal conductivity, as a result temperature gradient at the pellet radius increases and at does not encourage the reactor stable operation in load following mode.

A fuel composition 40 % wt. UO2+60 % wt. MgO is currently in use, its thermal conductivity is about 5.7 W/m deg. at temperature 1000 °C (1.5 times higher than design thermal conductivity) (I.S. Kurina, V.N. Lopatinsky, N.P., Yermolayev, N.N. Shevchenko. Research and Development of MgO based matrix fuel. - Proceedings of a Technical Committee meeting held in Moscow, 1-4 October 1996. IAEA-TECDOC-970, 1997, p. 169-181).

However, the known U0₂+MgO composition contains significant quantity of dilutant - MgO (60 % wt.). Full load of the existing reactors with fuel of such composition is impossible.

Increase of ²³⁵U concentration in U0₂+MgO fuel is required for its use in the existing fast neutron and thermal reactors. Thus, significant financial expenses are required; they are related to increased ²³⁵U enrichment of the fuel with change of the fuel manufacturing process instrumentation in accordance with nuclear safety.

A fuel pellet is currently in use that is composite and represents a uranium dioxide matrix with a thermal conductive phase located in it in a specific way. Thermal flow direction in the fuel is the same as orientation of the thermal conductive phase. Heat is transferred by monocrystal particles of beryllium oxide of acicular or platelike shape with dimensions 40-200 µm, optically transparent, dispersed in the uranium dioxide matrix (Patent N_> 2481657, published on May 10, 2013).

Although the known pellet permits to increase thermal conductivity of its material due to composite structure of the fuel, it does not contain special structure that includes nanopores inside the grains and uranium metalloclusters.

A fuel pellet (variants) is currently in use that contains compressed and sintered powder of uranium and carbon framework structures with uniform density and effective size.

A variant of this pellet is a zoned pellet; the central cylindrical zone of the pellet has lower contents of carbon framework structures than external annular zone. In special cases of the embodiment the contents of carbon framework structures (fullerenes, carbon nanotubes, carbon nanofibres) in the powder mixture is 1.5-12.5 % vol. for mixture with U0₂ and 1.2-10.4 % vol. for mixture with UN (Patent JVs 2469427RU, published on December 10, 2012).

Although the known pellet has increased mechanical and thermal strength, cracks initiation and propagation is slower, possibility of its deterioration is lower, but it does not ensure sufficiently high thermal conductivity if the temperature is increased due to its special structure and uranium dioxide simple composition.

A composite nuclear fuel pellet is modeled, it contains up to 3 % wt. of ordered graphite or silicon carbide particles with high thermal conductivity that allows increasing thermal conductivity of the pellet. A nuclear fuel composite grain of the known technical solution contains a composite solid that includes U0₂ matrix and lots of high proportion particles dispersed in it, here, high proportion particles have higher thermal conductivity than U0₂ matrix (Claim No. PCT/US2010/043307; International Publication Number WO/201 1/014476, published on February 3, 2011).

However, the particles with high thermal conductivity of the known pellet represent fibers from 0.25 to 1.25 cm in length and from 5 to 15 µm in width (diameter) that deteriorate during mixture and compressing (break, twist) and lose their function of increasing the pellet thermal conductivity.

Besides, introduction of up to 3 % of ordered graphite or silicon carbide to U02 results in decrease of uranium capacity of nuclear fuel and can create an emergency situation during the reactor operation.

A method of fuel pellets, fuel assemblies' production, a method of fuel rod arrays manufacturing and uranium powder for it are currently in use. Among fuel rods (13, 14, 15, 16, 17, 18, 19) that constitute fuel assemblies, fuel rods (16, 17, 18) are added, each of these rods contains uranium oxide with condensation level more than 5 %, nitrogen Gd compounds. The nitrogen Gd compounds include gadolinium oxides and oxides of rear earth elements other than gadolinium with chemical formula A1- 5 XGdXO2-0, 5X or AI-XGdXOI. The rear-earth metals can be cerium (Ce), lanthanum (La), ebrium (Er). (International application number: PCT/JP2009/001708, international filing date: April 14, 2009; International Publication Number: WO/2009/128250, publication date, October 22, 2009).

A method of obtaining a fuel composition for fast neutron reactors is currently in use, the method lies in preparation of fissile materials solutions, ammonia sedimentation, heat treatment of the powder to the fissile materials oxides with subsequent compression and sintering of pellets where magnesium and iron solutions are introduced at the stage of the solutions preparation, and iron is reduced to metallic condition (Patent N2 2098870RU, published on December 10, 1997).

However the known method does not permit to obtain more reliable structure and simpler composition of the uranium dioxide fuel pellet that possesses increased thermal conductivity with temperature increase (i. e. higher than reference data).

A method of obtaining ceramic ware is currently in use, the method includes operations of sedimentation of a metal carbonate, hydroxide, oxalate, etc. from the solution, heat treatment of the sediment, its forming and sintering, while the lower temperature limit of heat treatment is limited to the temperature of recrystallization, i. e. morphological changes of particles form (Patent N° 2135429 RU, published on August 27, 1999).

However the known method does not permit to obtain more reliable structure and simpler composition of the uranium dioxide fuel pellet that possesses increased thermal conductivity with temperature increase (i. e. higher than reference data).

A method of obtaining of fuel pellets based on uranium dioxide is currently in use, the method lies in addition of nanodispersed uranium hydride to initial uranium dioxide fine solution, thorough mixing of the components, vacuum drying the mixture at temperature 300-330 °C, the reaction of uranium hydride reduction to metal is carried out, compressing the dried product for pellets and its sintering in dynamic vacuum at 1500-1550 °C (Patent No. 2459289RU, published on August 20, 2012).

However the known method does not permit to obtain more reliable structure and simpler composition of the uranium dioxide fuel pellet that possesses increased thermal conductivity with temperature increase (i. e. higher than reference data).

A modification of fuel pellets of uranium dioxide is currently in use, it includes introduction of additives containing ammonia to standard U0₂ powder and improvement the technology of their manufacturing, obtaining of oxide ceramic materials including obtaining a sediment that contains particles of different sizes at the same time including nonoparticles, with subsequent calcination at optimum temperature (Kurina I. S. Modification of uranium dioxide fuel manufacturing for improvement of its operation characteristics.

// Digest of the first all Russian training workshop of undergraduate and postgraduate with national nanotechnological network area of activity "Functional nanomaterials for power engineering". - M.: National Nuclear Research University Moscow Engineering Physics Institute - 2011.- pp. 117-146).

The known publication describes general approaches of modification of uranium dioxide fuel pellets that cannot ensure, without creative elaboration, reliable special structure of fuel pellets and simple composition of uranium dioxide with increased thermal conductivity with temperature increase (higher than reference data).

The closest technical solution is the properties of the fuel pellet that is composite and represents a uranium dioxide matrix with a BeO thermal conductive phase located in it in a specific way. Thermal flow direction in the fuel is the same as orientation of the thermal conductive phase.

Heat is transferred by optically transparent monocrystal particles of beryllium oxide of acicular or platelike shape with dimensions 40-200 µm, optically transparent, dispersed in the uranium dioxide matrix, their contents in the fuel is 1-10 % wt. Calculations showed that if contents of BeO is 3 % wt. thermal conductivity increases not less than 21 % at temperature 1000 °C in comparison with U02 fuel. (Patent JVs 2481657, published on May 10, 2013).

However, increased thermal conductivity in the known pellet is reached only if flow direction is the same as orientation of the thermal conductive phase, but it is almost impossible to achieve during pellets manufacturing (mixing, compressing). Besides, production of such thermal conductive phase of monocrystal beryllium oxide is a large, complex manufacturing, it makes the nuclear fuel production much more expensive, and introduction of rather large quantity of BeO to U0₂ results in decrease of uranium capacity in the fuel. Besides, beryllium oxide is a reflector and moderator of neutrons and its addition will change the reactor physics.

The method, closest to the claimed one is the method of manufacturing of oxide ceramic ware with increased thermal conductivity, including operations of preparation of an acidic solution containing at least one metal cation including a fissible one, sedimentation of a salt or a hydroxide of at least one metal from the solution, heat treatment of the sediment at temperature not lower than the temperature of morphological changes of the sediment particles form, forming the products and their sintering where a metal hydroxide is sedimented by ammonia in two stages, pH at the first stage is lower than pH of complete metal sedimentation for not less than 0.5, and pH at the second stage is 9.5-10.5, the salt is sedimented as the metal oxalate using a concentrated solution of oxalic acid with stoichiometry excess not less than 20 %, formation of both large particles is not less than 0.1 µm and 0.05-2.0 % wt. of nanoparticles no more than 30 nm in the sediment is ensured (Patent J *2 2323912RU, published on May 10, 2008).

However the known method does not permit to obtain more reliable structure and simpler composition of the uranium dioxide fuel pellet that possesses increased thermal conductivity with temperature increase (i. e. higher than reference data).

The objective of this invention is elaboration of a more reliable fuel pellet of special structure and simple composition of uranium dioxide without foreign additives, a simple way of its manufacturing; the result should present approaching to monocrystal properties and increase of thermal conductivity with temperature increase (i. e. higher than reference data).

The following technical results are achieved with implementation of this invention.

The claimed pellet and the method of its manufacturing are easy to produce and have low cost of production.

The claimed pellet has more reliable special structure and simple composition of uranium dioxide without foreign additives.

The claimed pellet manufactured by the proposed method has similar properties as monocrystal, it has almost no porosity. Besides, it has higher thermal conductivity with temperature increase, i. e. higher than reference data.

The claimed pellet has increased ductility due to formation of metalloclusters and permits stable operation of the reactor in load following mode.

Besides, the method of its manufacture has rather low cost of production.

The following essential features influence reaching the above mentioned technical results. The assigned task is solved in the following way: a nuclear fuel pellet with increased thermal conductivity with structure of compressed and sintered powder of uranium dioxide, the pellet structure consists of pores evenly distributed at the grains borders, nanopores as well as metalloclusters of chemical compounds containing uranium with chemical valence 0 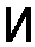 2⁺ are located inside the grains, nanopores size is from 1 to 200 nm and they constitute not less than 50 % of total porosity; the metalloclusters of chemical compounds containing uranium with chemical valence 0 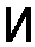 2⁺ are surrounded with 1FO₂, besides, total amount of metalloclusters representing a mixture of chemical compounds containing uranium with chemical valence 0 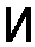 2⁺ is from 0.01 to 2 % wt. In order to produce the nuclear fuel pellet with increased conductivity the following method is used; it includes sedimentation of metal hydroxides with pH in two stages, calcination, sintering the powder representing uranium dioxide mixture and compressing, use of X-ray photon spectroscope, where sedimentation is performed by simultaneous pouring of uranyl nitrate and ammonia solutions to buffer solution, at temperature 55-60±2 °C in two stages: at the first stage pH level is kept at the level of 6.5-6.7, at the second stage additional sedimentation of ammonia polyuranate is performed at pH from 9.0 to 10.5; calcination is performed at temperature from 600 to 680 °C till U0₂ reduction; metallic uranium is melt at temperature above 1,150 °C, sintering is performed with insignificant amount of liquid phase at temperature from 1600 to 2200 °C in hydrogen-nitrogen medium till metalloclusters are formed.

In the extended variant of the method implementation, sedimentation is to be performed with simultaneous pouring of nitric-acid solution that contains uranium and metal additive and ammonia to buffer solution at temperature 55-60±2 °C in two stages: at the first stage pH level is kept at the level of 7.0-7.2, at the second stage additional sedimentation of ammonia polyuranate is performed at pH from 8.0 to 8.5, chrome, tin, titanium, aluminum, etc. are used as metal additives. If a standard technology is used, it is reasonable to introduce U02 powder to the additive containing ammonia by means of mechanic mixing in the amount from 0.01 to 0.5 %, ammonia carbonate or ammonia bicarbonate, paraphenylenediamine, triazole, etc should be used as an additive containing ammonia.

This invention is disclosed by detailed description, examples of embodiment and illustrations, where
Fig. 1 characterizes the microstructure of the proposed nuclear fuel pellet in accordance with the invention;
Fig. 2 - microstructure of the proposed nuclear fuel pellet based on uranium dioxide with pore size from 1 to 200 nm, such pores constitute 50 % of all pore volume of the pellet;
Fig. 3 - microstructure of a standard nuclear fuel pellet based on uranium dioxide;
Fig. 4 - a chart of temperature dependence of thermal conductivity of nuclear fuel pellets based on uranium dioxide;
Fig. 5 - a chart of temperature dependence of thermal conductivity of different uranium dioxide pellets.

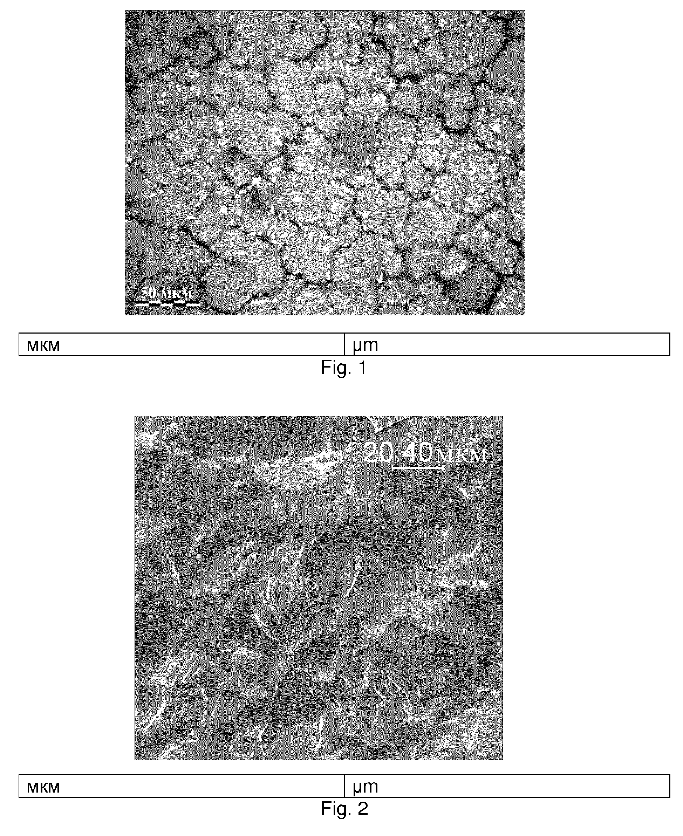

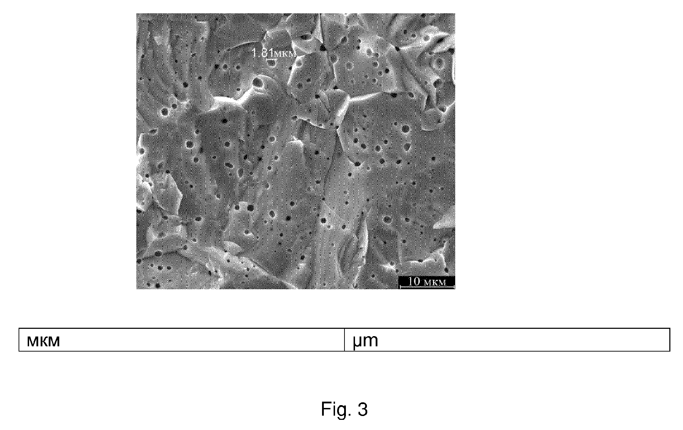

The nuclear fuel pellet with increased thermal conductivity (hereafter referred to as the pellet) contains the structure of compressed and sintered uranium dioxide powder (fig. 1). The pellet structure consists of 1-5 µm pores evenly distributed at the grains borders, and nanopores located inside the grains with size from 1 to 200 nm (Fig. 2). The amount of the nanopores is not less than 50 % of total porosity. The metalloclusters (hereafter referred to as the clusters) of chemical compounds containing uranium with chemical valence 0 2⁺ are surrounded by U0₂. Total amount of metalloclusters (hereafter referred to as the clusters) representing a mixture of chemical compounds containing uranium with chemical valence 0 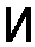 2⁺ is from 0.01 to 2 % wt., the clusters represent chemically bound uranium cations (U-U chemical bond). Micro hardness of such metalloclusters is >1.5 times lower than reference data. Due to metalloclusters O/U ratio is reduced to 1.996-1.999 inside the grains, and O/U ratio at the borders of the grain is 2.000-2.002 due to oxidizing when they are stored in the open air. It results in the increase of thermal conductivity of the pellet. Fig. 3 depicts, as an example, the microstructure of a standard nuclear fuel pellet based on uranium dioxide, where metalloclusters are missing.

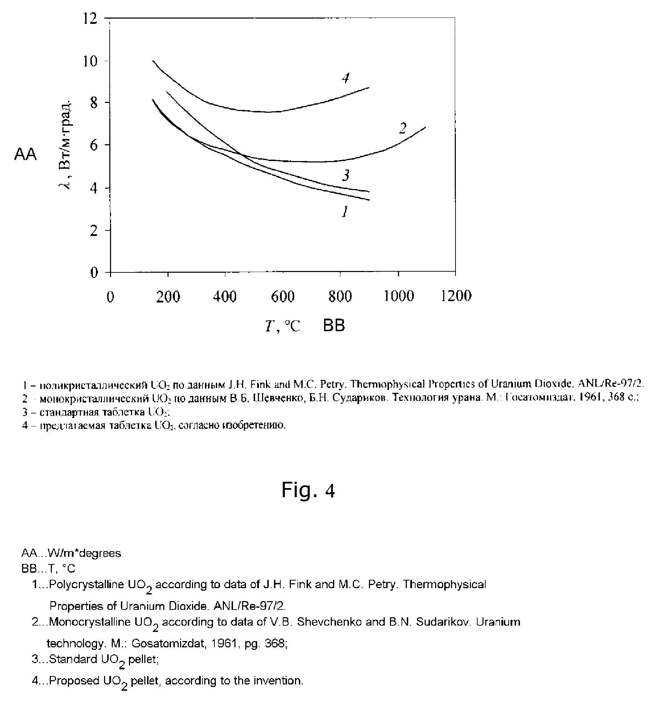

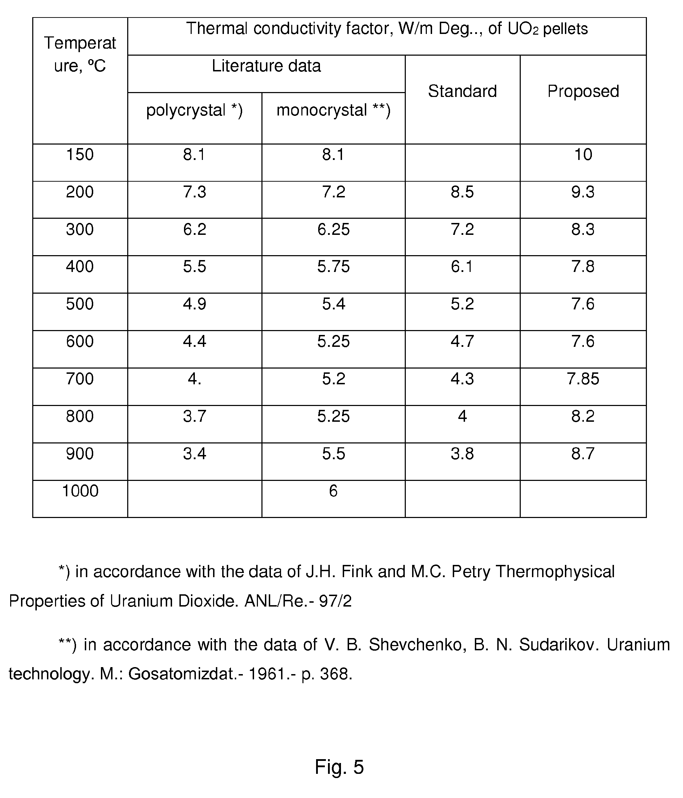

Thermal conductivity of the pellet 500-600 °C increases with the temperature increase, and when the temperature is 1000 °C its value 1.5-3 times exceeds reference and calculation data (fig. 4, 5). It can be explained as follows. The character of temperature dependence of thermal conductivity measured by a classical method of axial heat flow for the proposed U0₂ pellet is very similar to the character of temperature dependence of thermal conductivity of monocrystal U0₂. Thermal conductivity of a monocrystal does not depend on its size or orientation. When the temperature is 700 °C monocrystal thermal conductivity is 60 % higher than average thermal conductivity of sintered UCh polycrystal. When the temperature is 700 °C monocrystal thermal conductivity is 5.9 W/m deg., it is 2.4 times higher than thermal conductivity of sintered polycrystal uranium dioxide.

The following method is used to produce the nuclear fuel pellet with increased thermal conductivity; it includes sedimentation of metal hydroxides with pH in two stages, calcination, sintering the powder representing uranium dioxide mixture, compressing, and use of X-ray photon spectroscope. When the method is used, sedimentation is performed with simultaneous pouring of uranyl nitrate and ammonia solutions to buffer solution at temperature 55-60±2 °C in two stages. At the first stage pH level is kept at the level of 6.5-6.7, at the second stage additional sedimentation of ammonia polyuranate is performed at pH from 9.0 to 10.5. Calcination is performed at temperature from 600 to 680 °C till U0₂ reduction. Metallic uranium is melt at temperature above 1,150 °C, sintering is performed with insignificant amount of liquid phase at temperature from 1600 to 2200 °C in hydrogen-nitrogen medium till metalloclusters are formed. Sintering in liquid phase results in forming the required porosity and structure of the pellet. 1-5 µm pores are formed at the grains borders, nanopores with size from <1 to 200 nm are formed inside the grains; these pores constitute not less than 50 % of total porosity. 0/U ration decreases to 1.996-1.999 in U0₂-U system. Uranium dioxide is formed; its structure includes dispersed metalloclusters of chemical compounds containing uranium with chemical valence 0 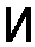 2⁺, surrounded by U0₂. New structure of the U02 pellet and additional chemical bond U-U is identified by means of an X-ray photon spectroscope that showed that such metalloclusters constitute 0.01-2 % wt. of the pellet.

In the extended variant of implementation of the method of catalysts production sedimentation is performed with simultaneous pouring of nitric-acid solution that contains uranium and metal additive and ammonia to buffer solution at temperature 55-60±2 °C in two stages also.

Here, at the first stage pH level is kept at the level of 7.0-7.2, at the second stage additional sedimentation of ammonia polyuranate is performed at pH from 8.0 to 8.5. Chrome, tin, titanium, aluminum, etc. are used as metal additives. The additives are catalysts that encourage partial reduction of uranium dioxide nanoparticles to metallic uranium in the process of the pellets sintering in the areas adjacent to the additive.

If a standard technology is used, U02 powder is introduced to the additive by means of mechanic mixing in range of 0.01 to 0.5 %, while ammonia carbonate or ammonia bicarbonate, paraphenylenediamine, triazole, etc. are used as an additive.

### EXAMPLE 1

A nuclear fuel pellet with enhanced thermal conductivity was produced as follows.

Sedimentation was performed with simultaneous pouring of uranyl nitrate and ammonia solutions to buffer solution at temperature 55-60±2 °C in two stages. Ammonia solution was introduced to ammonia polyuranate sedimentation bowl. At the first stage pH level was kept at the level of 6.5-6.7, at the second stage additional sedimentation of ammonia polyuranate was performed at pH from 9.0 to 10.5. Calcination was performed at temperature from 600 to 680 °C till U0₂ reduction. Metallic uranium was melt at temperature above 1,150 °C, then sintering was performed with insignificant amount of liquid phase at temperature 1,750 °C in hydrogen-nitrogen medium till metalloclusters were formed. Sintering in liquid phase resulted in forming the required porosity and structure of the pellet. New structure of the U02 pellet and additional chemical bond U-U was identified by means of an X-ray photon spectroscope. The pellet structure has pores evenly distributed both at the grains edges and inside the grains. 1-5 µm pores were identified at the grains borders, while nanopores with size from <1 to 200 nm were identified inside the grains; these pores constituted not less than 50 % of total porosity. Moreover, it was mentioned that the size of nanopores was even less than microscope resolution, i. e. less than 1 nm. Here, sintered pellets in U0₂-U system had U0₂ phase composition and O/U ratio equal to 2.002 at the grains edges and 1.998 - inside the grains. Dispersed metalloclusters of chemical compounds containing uranium with chemical valence 0 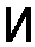 2⁺, surrounded by U0? were found in uranium dioxide structure. Such metalloclusters of the mixture of chemical compounds containing uranium with chemical valence 0 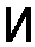 2⁺ constituted 0.01-2 % wt. of the pellet.

### EXAMPLE 2

A nuclear fuel pellet with enhanced thermal conductivity was produced as follows.

Sedimentation was performed with simultaneous pouring of nitric-acid solution that contains uranium and metal additive and ammonia to buffer solution at temperature 55-60±2 °C in two stages also. Here, at the first stage pH level was kept at the level of 7.0-7.2, at the second stage additional sedimentation of ammonia polyuranate was performed at pH from 8.0 to 8.5. Chrome was used as a metal additive. The additives encouraged partial reduction of uranium dioxide nanoparticles to metallic uranium in the process of the pellets sintering in the areas adjacent to the additive. Metallic uranium was melt at temperature above 1,150 °C, then sintering was performed with insignificant amount of liquid phase at temperature 1,750 °C in hydrogen-nitrogen medium till metalloclusters were formed. Sintering in liquid phase resulted in forming the required porosity and structure of the pellet.

New structure of the U02 pellet and additional chemical bond U-U was identified by means of an X-ray photon spectroscope. The pellet structure has pores evenly distributed both at the grains edges and inside the grains. 1-5 µm pores were identified at the grains borders, where nanopores with size from <1 to 200 nm were identified inside the grains; these pores constituted not less than 50 % of total porosity.

Moreover, it was mentioned that the size of nanopores was even less than microscope resolution, i. e. less than 1 nm. Here, sintered pellets in U02-U system had U0₂ phase composition and O/U ratio equal to 2.002 at the grains edges and 1.998 - inside the grains.

Dispersed metalloclusters of chemical compounds containing uranium with chemical valence 0 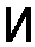 2⁺, surrounded by U02 were found in uranium dioxide structure. Such metalloclusters of the mixture of chemical compounds containing uranium with chemical valence 0 2⁺ constituted 0.01-2 % wt. of the pellet.

### EXAMPLE 3

0.5 % wt. of 4-amino1, 2, 4-triazole (hereafter referred to as triazole) was added to uranium dioxide powder, manufactured using a standard technology, and was mechanically mixed. The pellets that were sintered at temperature 1750 °C in hydrogen environment were compressed. During sintering the ammonia containing radical of triazole degraded and disengaged hydrogen that encouraged reduction of the adjacent areas of uranium dioxide in the pellet. As a result metalloclusters and substoichiometric composition was formed in the internal part of pellets.

Metallic uranium was melt at temperature above 1,150 °C, then sintering was performed with insignificant amount of liquid phase at temperature from 1,750 °C in hydrogen-nitrogen medium till metalloclusters were formed. Sintering in liquid phase resulted in forming the required porosity and structure of the pellet. New structure of the U02 pellet and additional chemical bond U-U was identified by means of an X-ray photon spectroscope. The pellet structure has pores evenly distributed both at the grains edges and inside the grains. 1-5 µm pores were identified at the grains borders, while nanopores with size from <1 to 200 nm were identified inside the grains; these pores constituted not less than 50 % of total porosity. Moreover, it was mentioned that the size of nanopores was even less than microscope resolution, i. e. less than 1 nm. Here, sintered pellets in U02-U system had U0₂ phase composition and O/U ratio equal to 2.001 at the grains edges and 1.999 - inside the grains. Dispersed metalloclusters of chemical compounds containing uranium with chemical valence 0 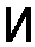 2⁺, surrounded by U02 were found in uranium dioxide structure. Such metalloclusters of the mixture of chemical compounds containing uranium with chemical valence 0 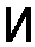 2⁺ constituted 0.01-2 % wt. of the pellet.

## Claims

1. A nuclear fuel pellet with increased thermal conductivity with structure of compressed and sintered powder of uranium dioxide, **characterized in that** the pellet structure consists of pores evenly distributed at the grains borders, and nanopores as well as metalloclusters of chemical compounds containing uranium with chemical valence 0 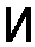 2⁺ are located inside the grains.

2. The pellet in accordance with claim 1 **characterized in that** the nanopores size is from 1 to 200 nm and they constitute not less than 50 % of total porosity.

3. The pellet in accordance with claim 1 **characterized in that** the metalloclusters of the mixture of chemical compounds containing uranium with chemical valence 0 2⁺ are surrounded by U0₂.

4. The pellet in accordance with claim 1 **characterized in that** total amount of metalloclusters representing a mixture of chemical compounds containing uranium with chemical valence 0 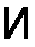 2⁺ is from 0.01 to 2 % wt.

5. Method of production of the nuclear fuel pellet with increased conductivity in accordance with claim 1 that includes sedimentation of metal hydroxides with pH in two stages, calcination, sintering the powder representing uranium dioxide mixture and compressing, use of X-ray photon spectroscope, **characterized in that** the sedimentation is performed by simultaneous pouring of uranyl nitrate and ammonia solutions to buffer solution, at temperature 55-60±2 °C in two stages: at the first stage pH level is kept at the level of 6.5-6.7, at the second stage additional sedimentation of ammonia polyuranate is performed at pH from 9.0 to 10.5; calcination is performed at temperature from 600 to 680 °C till U0₂ reduction; metallic uranium is melt at temperature above 1,150 °C, sintering is performed with insignificant amount of liquid phase at temperature from 1600 to 2200 °C in hydrogen-nitrogen medium till metalloclusters are formed.

6. The method per Item 5 is distinguished by that sedimentation is performed with simultaneous pouring of nitric-acid solution that contains uranium and metal additive and ammonia to buffer solution at temperature 55-60±2 °C in two stages: at the first stage pH level is kept at the level of 7.0-7.2, at the second stage additional sedimentation of ammonia polyuranate is performed at pH from 8.0 to 8.5.

7. The method per Item 5 is distinguished by that U02 powder is introduced to the additive containing ammonia by means of mechanic mixing in the amount from 0.01 to 0.5 %.

8. The method per Item 5 is distinguished by that ammonia carbonate or ammonia bicarbonate, paraphenylenediamine, triazole, etc. are used as an additive.
